# EUROPEAN PATENT SPECIFICATION

(11) **EP 3 348 462 B1**
(45) Date of publication and mention of the grant of the patent: **07.08.2024**
(21) Application number: 18150674.2
(22) Date of filing: 09.01.2018
(51) Int. Cl.: B62J 17/10, F01P 11/10, B60K 11/04, B62M 7/04, B62K 11/04, B62J 23/00

(54) **STRADDLED VEHICLE**
GRÄTSCHSITZFAHRZEUG
VÉHICULE À ENFOURCHER

(30) Priority: 12.01.2017 JP 2017003264
(43) Date of publication of application: 18.07.2018
(73) Proprietor: Yamaha Hatsudoki Kabushiki Kaisha, Iwata-shi, Shizuoka 438-8501 (JP)
(72) Inventor: UEDA, Takumi, Iwata-shi, Shizuoka 438-8501 (JP); NODA, Masahiro, Iwata-shi, Shizuoka 438-8501 (JP)
(74) Representative: Grünecker Patent- und Rechtsanwälte PartG mbB

(56) References cited:
- EP-A1- 2 757 029
- EP-A2- 0 248 619
- EP-A2- 2 431 265
- WO-A1-2016/170689
- JP-A- 2013 071 552
- US-A- 4 964 484
- US-A1- 2004 211 610
- E. BOUJO ET AL: "Manipulating flow separation: sensitivity of stagnation points, separatrix angles and recirculation area to steady actuation", ROYAL SOCIETY OF LONDON. PROCEEDINGS. MATHEMATICAL, PHYSICAL AND ENGINEERING SCIENCES, vol. 470, no. 2170, 13 August 2014 (2014-08-13), GB, pages 20140365 - 20140365, XP055477390, ISSN: 1364-5021, DOI: 10.1098/rspa.2014.0365

## Description

The present invention relates to a straddled vehicle. The prior art document EP 2 757 029 A1 discloses the preamble of claim 1.

EP 2719613 A1 discloses a motorcycle as an example of a straddled vehicle. The motorcycle includes an engine, a radiator disposed in front of the engine, and a pair of left and right side covers disposed on the right and left sides of the radiator, respectively.

Fig. 14 of EP 2719613 A1 shows that a rear edge portion of a lower portion of the side cover overlaps an engine. A member that is presumably a radiator hose is overlapping the side cover. Figs. 12 and 16 of EP 2719613 A1 are drawn so that the rear edge portion of the lower portion of the side cover extends inward in a vehicle width direction.

In a case where the most portion of the radiator hose is not covered by the side cover but is disposed behind the side cover in a side view of the vehicle, when an air flow is generated and flows inward in the vehicle width direction from the rear edge portion of the side cover, the air flow could come into contact with the radiator hose. When such an air flow contacts the radiator hose, the air resistance of the motorcycle increases.

In the motorcycle disclosed in EP 2719613 A1, the side cover overlaps with the engine in a side view of the vehicle, and the radiator hose is covered by the side cover. In EP 2719613 A1, however, the rear edge portion of the lower portion of the side cover is depicted as extending inward in the vehicle width direction. In this case, it is more likely that an air flow is generated flowing inward in the vehicle width direction from the rear edge portion of the lower portion of the side cover.

In the motorcycle of EP 2719613 A1, some of the travel wind that has passed the radiator is discharged rearward between the engine and the side cover. When an air flow is generated flowing inward in the vehicle width direction from the rear edge portion of the lower portion of the side cover, the air flow crosses and impacts with the travel wind that has passed the radiator, disturbing the flow of the travel wind that has passed the radiator. In this case, air is less able to be discharged from the rear of the radiator, resulting in reduced cooling efficiency of the radiator.

This problem is not limited to radiators that cool cooling liquids with travel wind, but is also produced with air-cooling oil coolers that cool engine oil with travel wind.

It is therefore an object of the present invention to provide a straddled vehicle that can increase the cooling efficiency of a cooling device that cools liquid with travel wind. According to the present invention, the present object is achieved by a straddled vehicle according to Claim 1. Preferred embodiments are laid down in the dependent claims.

With this arrangement, the outer air guide overlaps with both the engine and the cooling device in a side view. All or most of the hose that guides liquid between the engine and the cooling device is covered by the outer air guide. Consequently, even when an air flow flowing from the rear edge portion of the outer air guide inward in the width direction has been generated, the air flow is unlikely to contact with the hose. It is thus possible to reduce an increase in air resistance of the straddled vehicle and a decrease in cooling efficiency of the cooling device.

Travel wind flowing rearward on the outer surface of the outer air guide moves away from the outer air guide at the burble point located at the rear edge portion of the outer air guide, and flows rearward from the burble point. The tangent line of the horizontal cross-section of the outer surface of the outer air guide at the burble point (hereinafter also referred to as "tangent line at the burble point") is either parallel to the front-rear direction, or obliquely inclined with respect to the front-rear direction so that it moves away from the center of the straddled vehicle in the width direction as it moves away rearward from the burble point.

When the tangent line at the burble point is parallel to the front-rear direction, travel wind flowing rearward on the outer surface of the outer air guide flows rearward from the burble point in a direction parallel to the front-rear direction. When the tangent line at the burble point is obliquely inclined with respect to the front-rear direction so that it moves away from the center of the straddled vehicle in the width direction as it moves away rearward from the burble point, travel wind flowing rearward on the outer surface of the outer air guide flows rearward from the burble point in an obliquely outward direction.

Thus, both cases of the tangent line at the burble point inhibit generation of an air flow flowing inward in the width direction from the rear edge portion of the outer air guide. Thus, travel wind that has passed through the core of the cooling device is unlikely to stagnate behind the core. Conversely, slow travel wind floating behind the core is drawn by differential pressure toward the fast travel wind flowing rearward from the burble point, and is rapidly discharged from a vicinity of the engine. The cooling efficiency of the cooling device can thus be increased.

The cooling device may be a radiator that cools cooling liquid, or an oil cooler that cools engine oil. When the cooling device is a radiator, the liquid is cooling liquid, and when the cooling device is an oil cooler, the liquid is engine oil.

The burble point is a location where the air flow flowing on the outer surface of the outer air guide begins to move away from the outer surface of the outer air guide. The burble point is formed on the rear edge portion of the outer air guide. It is not necessary for the burble point to be formed at the rearmost portion of the outer air guide. When multiple burble points are formed on the outer surface of the outer air guide, the burble point formed at the rear edge portion of the outer air guide corresponds to the burble point of the present preferred embodiment.

In the present preferred embodiment, at least one of the following features may be added to the above straddled vehicle.

The horizontal cross-section of the outer surface of the outer air guide includes a rear end disposed outward of the engine in the width direction of the straddled vehicle, and a front end disposed at a location further forward than the rear end and further inward in the width direction of the straddled vehicle than the rear end.

With this arrangement, the rear end of the horizontal cross-section of the outer surface of the outer air guide is disposed outward of the engine in the width direction, and overlaps with the engine in a side view. Travel wind passing through the core of the cooling device is discharged rearward between the rear end of the horizontal cross-section and the engine. In other words, the rear end of the horizontal cross-section and the engine define an outlet port through which travel wind that has passed the core is discharged rearward.

The rear end of the horizontal cross-section defining the outlet port is disposed further on the outer side in the width direction than the front end of the horizontal cross-section of the outer surface of the outer air guide. Thus, the width of the outlet port (the length in the width direction) is wider, compared to when the front end of the horizontal cross-section and the rear end of the horizontal cross-section are aligned in the front-rear direction, or when the front end of the horizontal cross-section is disposed further on the outer side in the width direction than the rear end of the horizontal cross-section. This allows the travel wind that has passed the core to be efficiently discharged from a vicinity of the engine.

The straddled vehicle further includes an inner air guide configured to guide travel wind rearward toward the core of the cooling device, the cooling device further includes a tank that is connected to the plurality of tubes and configured to guide liquid between the plurality of tubes and the hose, and the inner air guide includes an inner edge portion disposed further inward in the width direction of the straddled vehicle than the outer edge portion of the tank, and an outer edge portion disposed at a location further outward in the width direction of the straddled vehicle than the outer edge portion of the tank and further forward than the inner edge portion.

With this arrangement, travel wind is guided rearward toward the core of the cooling device by the inner air guide. The inner edge portion of the inner air guide is disposed further inward in the width vehicle direction than the outer edge portion of the tank of the cooling device. When the inner edge portion of the inner air guide is disposed further outward in the width vehicle direction than the outer edge portion of the tank, some of the travel wind flowing rearward on the inner air guide passes through the side of the tank, without passing through the core. It is thus possible to guide more travel wind to the core by disposing the inner edge portion of the inner air guide further inward in the width vehicle direction than the outer edge portion of the tank.

The tank may be an upper tank that stores liquid before cooling at the cooling device, or a lower tank that stores liquid that has been cooled at the cooling device.

The inner air guide extends rearward from the outer air guide toward the core of the cooling device.

With this arrangement, the outer edge portion of the inner air guide contacts with the outer air guide, and extends from the outer air guide rearward toward the core of the cooling device. When the outer edge portion of the inner air guide is positioned away from the outer air guide, some of the travel wind passes between them without passing through the core. Thus, it is possible to guide more travel wind to the core by connecting the outer edge portion of the inner air guide with the outer air guide.

The entire hose is disposed further inward in the width direction of the straddled vehicle than the burble point.

With this arrangement, the burble point of the outer air guide is disposed further outward in the width direction than any portion of the hose. Travel wind flowing rearward on the outer surface of the outer air guide moves away from the outer air guide at the burble point, and flows rearward or in an obliquely outward direction from the burble point. Since the entire hose is disposed further inward in the width direction than the burble point, even if a portion of the hose is disposed further to the rear than the burble point, travel wind moving away from the outer air guide is less likely to impact the hose. Consequently, air resistance on the straddled vehicle can be reduced compared to when a portion of the hose is disposed further outward in the width direction than the burble point.

The outer air guide overlaps with the entire hose in a side view of the straddled vehicle.

With this arrangement, the entire hose is disposed on the inner side of the outer air guide in the width direction, and overlaps with the outer air guide in a side view. Thus, travel wind that has moved rearward away from the burble point of the outer air guide does not contact any portion of the hose. As a result, it is possible to prevent the air resistance from increasing due to impact of travel wind on the hose.

The outer air guide overlaps with the entire core of the cooling device in a side view of the straddled vehicle.

With this arrangement, the entire core of the cooling device is covered by the outer air guide in a side view, and therefore fast travel wind flowing on the outer surface of the outer air guide is less likely to flow toward the core of the cooling device. Therefore, the flow of air flowing rearward toward the core of the cooling device is less likely to be disturbed by fast travel wind that has moved away from the outer air guide. This allows the flow rate of air passing the core to be even further stabilized.

The outer air guide includes a side wall portion that overlaps with both the engine and the cooling device in a side view of the straddled vehicle, and a rear wall portion that extends inward in the width direction of the straddled vehicle from the rear edge portion of the side wall portion.

With this arrangement, travel wind flows rearward along the outer surface of the side wall portion of the outer air guide. The rear wall portion of the outer air guide extends inward in the width direction from the rear edge portion of the side wall portion. The side wall portion of the outer air guide is reinforced by the rear wall portion of the outer air guide. This increases the rigidity of the outer air guide.

The cross-section of the rear wall portion of the outer air guide may be rectangular, semicircular or arc-shaped, or it may include a rectangular portion and a semicircular portion, or it may include a rectangular portion and an arc-shaped portion. When the rear wall portion includes a rectangular portion, the rectangular portion of the rear wall portion may be perpendicular to the front-rear direction or obliquely inclined with respect to the front-rear direction. In the latter case, the rectangular portion of the rear wall portion may extend forward from the rear edge portion of the side wall portion toward the center of the straddled vehicle in the width direction, or it may extend rearward from the rear edge portion of the side wall portion toward the center of the straddled vehicle in the width direction.

The outer air guide includes a side wall portion that overlaps with both the engine and the cooling device in a side view of the straddled vehicle, and a protruding portion that protrudes outward in the width direction of the straddled vehicle from the rear edge portion of the side wall portion, and the burble point is disposed in the protruding portion.

With this arrangement, travel wind flowing rearward on the outer surface of the side wall portion of the outer air guide impacts with the protruding portion that protrudes outward in the width direction from the rear edge portion of the side wall portion. Travel wind that has impacted the protruding portion moves away from the burble point located at the protruding portion, while being guided outward in the width direction by the protruding portion. This allows an air flow to be reliably formed flowing obliquely rearward and outward from the burble point, and can reduce the air flow flowing obliquely rearward and inward from the burble point.

The cross-section of the protruding portion of the outer air guide may be rectangular, semicircular or arc-shaped, or it may include a rectangular portion and a semicircular portion, or it may include a rectangular portion and an arc-shaped portion. When the protruding portion includes a rectangular portion, the rectangular portion of the protruding portion may be perpendicular to the front-rear direction or obliquely inclined with respect to the front-rear direction. In the latter case, in order to reduce air resistance on the straddled vehicle, the rectangular portion of the protruding portion preferably extends obliquely rearward and outward from the rear edge portion of the side wall portion. Similarly, when the protruding portion includes an arc-shaped portion, in order to reduce air resistance on the straddled vehicle, the arc-shaped portion of the protruding portion preferably includes an arc-shaped configuration that opens rearward and inward.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a left side view of a motorcycle according to a preferred embodiment.
Fig. 2 is a conceptual drawing illustrating the cooling system of the motorcycle.
Fig. 3 is an enlarged view showing a portion of the left side of the motorcycle.
Fig. 4 is a cross-sectional view showing a horizontal cross-section of a side cover, outer air guide and inner air guide taken along line IV-IV of Fig. 3.
Fig. 5 is a front view showing an engine, radiator and exterior cover.
Fig. 6 is an exploded perspective view of an exterior cover.
Fig. 7 is an exploded left side view of the exterior cover.
Fig. 8 is an enlarged view of a portion of Fig. 4, showing a horizontal cross-section of the outer surface of the outer air guide.
Fig. 9 is a schematic view showing a horizontal cross-section for describing the air flow formed near the radiator and engine when the motorcycle is traveling.
Fig. 10 is a schematic cross-sectional view showing a horizontal cross-section of the rear edge portion of the outer air guide according to another preferred embodiment.

### DETAILED DESCRIPTION OF PREFERRED EMBODIMENTS

Front-rear, up-down, and right-left directions are defined on the basis of a viewpoint of a forward-facing rider who sits on a motorcycle 1 in a reference posture in which the motorcycle 1 travels straight ahead on a horizontal plane (in which a steering handle 5 is disposed at a straight-traveling position). The right-left direction corresponds to a vehicle width direction (the width direction of the motorcycle 1). A vehicle center WO represents a center of the motorcycle 1 in the width direction. The vehicle center WO corresponds to a vertical plane that passes through a center line of a head pipe 3 and that is perpendicular to a rotational center of a rear wheel Wr. The motorcycle 1 in the reference posture will be hereinafter described unless specific notice is given. A front view, a side view, a plan view and a rear view mean a front view, a side view, a plan view an rear view of the motorcycle 1, respectively unless specific notice is given.

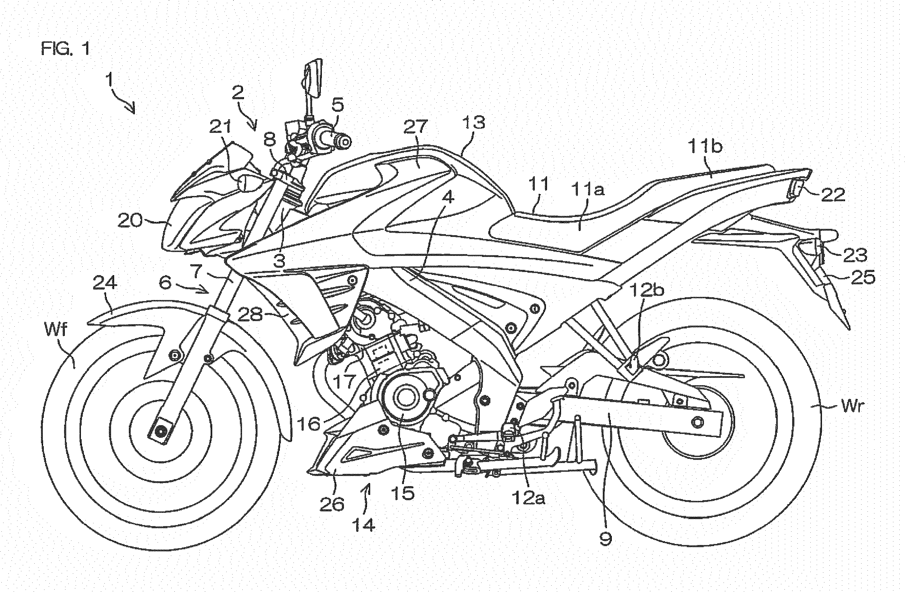

FIG. 1 is a left side view of the motorcycle 1 according to a preferred embodiment. The motorcycle 1, which is an example of a straddled vehicle, includes a frame 2 covered with an exterior cover.

The frame 2 includes a head pipe 3 that extends obliquely rearward and upward, a right-and-left pair of main frames 4 that extend rearward and downward from the head pipe 3, and a right-and-left pair of seat frames that extend rearward from the pair of main frames 4. The pair of main frames 4 are disposed at a right side and a left side of the vehicle center WO, respectively. The pair of main frames 4 face each other in the vehicle width direction. The same applies to the pair of seat frames.

The motorcycle 1 includes a steering handle 5 that is steered by a rider, and a front fork 6 that rotatably supports the front wheel Wf. The steering handle 5 is connected to a front fork 6, as an example of a front wheel support member. The steering handle 5 and front fork 6 are rotatable with respect to the frame 2, around a steering axis corresponding to the center line of the head pipe 3. When the steering handle 5 is steered, the front wheel Wf rotates left and right together with the steering handle 5. The motorcycle 1 is thus steered.

The front fork 6 includes a pair of left and right fork pipes 7 disposed on the left and right sides, respectively, of the front wheel Wf, and a top bracket 8 connected to the pair of fork pipes 7. The front fork 6 also includes an under bracket disposed further below the top bracket 8 and connected to the pair of fork pipes 7, and a steering shaft extending from the under bracket to the top bracket 8. The steering shaft is inserted in the head pipe 3.

The motorcycle 1 includes a swingarm 9 that swings up and down with respect to the frame 2 together with the rear wheel Wr, and a rear suspension that absorbs shock between the rear wheel Wr and the frame 2. The front end portion of the swingarm 9 is connected to the frame 2 via a pivot shaft that extends in the vehicle width direction. The swingarm 9 and the rear wheel Wr can be swung up and down around the pivot shaft. The upper end portion of the rear suspension is mounted on the frame 2. The lower end portion of the rear suspension is mounted on the swingarm 9.

The motorcycle 1 includes a saddle-shaped sheet 11 on which the rider sits, and a pair of left and right main steps 12a on which the feet of the rider are placed. Fig. 1 shows an example in which the sheet 11 is provided with the main sheet 11a on which the rider sits and a tandem sheet 11b on which a passenger sits. In this case, the motorcycle 1 includes a pair of left and right tandem steps 12b on which the feet of the passenger are placed. The sheet 11 may be a single-rider type. The sheet 11 is disposed further to the rear than the head pipe 3 of the frame 2. The sheet 11 is supported on the frame 2. The main step 12a and the tandem step 12b are also supported on the frame 2.

The motorcycle 1 includes an engine 14 (internal combustion engine) that generates power to drive the motorcycle 1, and a driving mechanism that transmits the power of the engine 14 to the rear wheel Wr. The motorcycle 1 further includes a fuel tank 13 that stores fuel to be supplied to the engine 14, and a muffler that discharges exhaust gas generated in the engine 14 into the air. The engine 14 includes a cylinder 16, 17 that houses a piston represented by dashed lines, and a crankcase 15 that houses a crankshaft that rotates in accordance with the reciprocation of the piston. The cylinder 16, 17 includes a cylinder body 16 that houses a piston, a cylinder head 17 that defines a combustion chamber, and a head cover that covers the cylinder head 17.

The cylinder body 16 extends obliquely forward and upward from the crankcase 15. The cylinder head 17 is disposed above the cylinder body 16, and the head cover is disposed above the cylinder head 17. The cylinder body 16 and crankcase 15 are mounted on the frame 2. The fuel tank 13 and muffler are also mounted on the frame 2. The fuel tank 13 is disposed above the engine 14. The fuel tank 13 is disposed in front of the sheet 11.

The motorcycle 1 includes a head lamp 20 that emits light forward, and two front flashers 21 that flash in response to operation by the rider. The motorcycle 1 further includes a tail lamp 22 that emits light rearward, and two rear flashers 23 that flash in response to operation by the rider. The head lamp 20 and front flashers 21 are disposed further forward than the sheet 11. The tail lamp 22 and rear flashers 23 are disposed further rearward than the front end of the rear wheel Wr. The rear fender 25 is disposed above the rear wheel Wr. The front fender 24 is disposed above the front wheel Wf.

The exterior cover includes a pair of left and right outer air guides 28 disposed on the left and right sides, respectively, of the pair of main frames 4, and a pair of left and right side covers 27 disposed on the left and right sides, respectively, of the pair of outer air guides 28. The exterior cover further includes a pair of left and right under covers 26 disposed on the left and left sides, respectively, of the crankcase 15. The upper end portion of the engine 14 is disposed between the pair of outer air guides 28. The outer air guides 28 overlap with the cylinder head 17 and the head cover, in a side view. The remaining portions of the cylinder 16, 17 are not covered by the exterior cover and are visible in a side view.

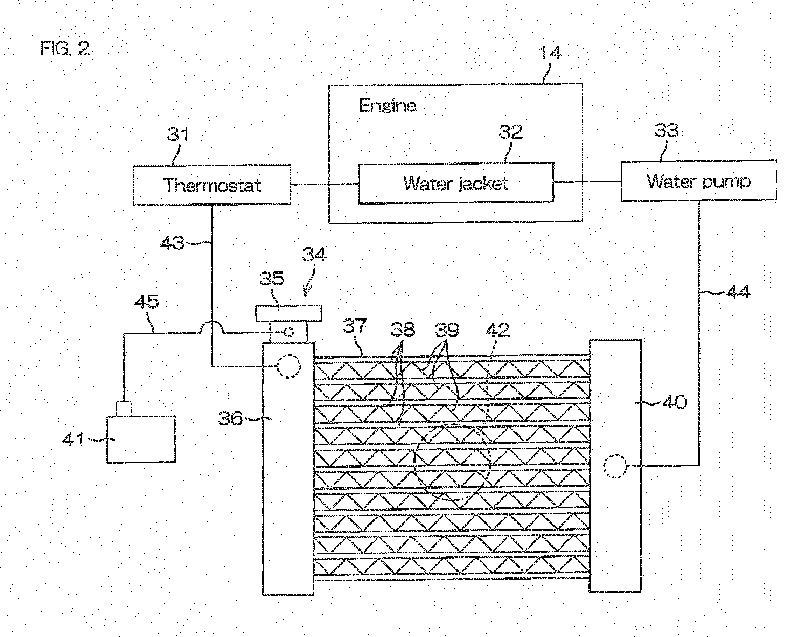

Fig. 2 is a conceptual drawing illustrating the cooling system of the motorcycle 1.

The cooling system of the motorcycle 1 includes a water jacket 32 provided in the engine 14, and a water pump 33 that sends cooling liquid to the water jacket 32. The cooling system further includes a radiator 34 that cools cooling liquid passing through the water jacket 32 with travel wind generated by traveling of the motorcycle 1, and a thermostat 31 disposed between the water jacket 32 and the radiator 34.

The water pump 33 includes a rotor that is driven by the engine 14, and a pump case that houses the rotor. The water pump 33 and thermostat 31 are held by the engine 14. Cooling liquid sent from the water pump 33 passes through the water jacket 32 and reaches the thermostat 31. When the temperature of the cooling liquid is at or above a prescribed value, the thermostat 31 allows cooling liquid to pass through to the radiator 34. On the other hand, the cooling liquid that has been cooled at the radiator 34 is again sucked in the water pump 33. The cooling liquid thus circulates through the cooling liquid channel.

The radiator 34 includes an upper tank 36 that stores cooling liquid that has passed through the water jacket 32, a core 37 that cools the cooling liquid in the upper tank 36 by travel wind, and a lower tank 40 that stores the cooling liquid that has been cooled at the core 37. The radiator 34 further includes a radiator cap 35 that closes the liquid supply port provided in the upper tank 36 and allows the cooling liquid inside the upper tank 36 to pass through the radiator cap 35 toward a reservoir tank 41 when a pressure equal to or higher than the constant value is applied. The reservoir tank 41 is connected to the radiator cap 35 via an overflow hose 45.

The upper tank 36 and lower tank 40 are disposed on the right and left sides, respectively, of the core 37. The radiator cap 35 is mounted on the upper end portion of the upper tank 36. The upper tank 36 and lower tank 40 may be disposed above and below the core 37, respectively. The upper tank 36 is connected to the thermostat 31 via a supply hose 43 that guides the cooling liquid. The lower tank 40 is connected to the water pump 33 via a discharge hose 44 that guides the cooling liquid.

The core 37 includes a plurality of tubes 38 that deliver cooling liquid from the upper tank 36 to the lower tank 40, and undulating fins 39 disposed between the plurality of tubes 38. The plurality of tubes 38 extend in the vehicle width direction and are mutually parallel. The fins 39 are in contact with the plurality of tubes 38. When the motorcycle 1 is traveling, travel wind passes between the plurality of tubes 38 in the front-rear direction. During this period, the travel wind contacts with the fins 39 disposed between the plurality of tubes 38. Heat of the cooling liquid is discharged into the air via the plurality of tubes 38 and the fins 39. The cooling liquid inside the radiator 34 is thus cooled.

A cooling fan 42 that sends air rearward is disposed behind the core 37. The cooling fan 42 is held by the radiator 34. The cooling fan 42 is an electric fan driven by electric power stored in a battery. While the engine 14 is operating, the cooling fan 42 delivers air rearward even when the motorcycle 1 is stopped. As a result, air in front of the radiator 34 passes the radiator 34 in the front-rear direction. The cooling liquid is therefore cooled at the radiator 34 even when the motorcycle 1 is stopped.

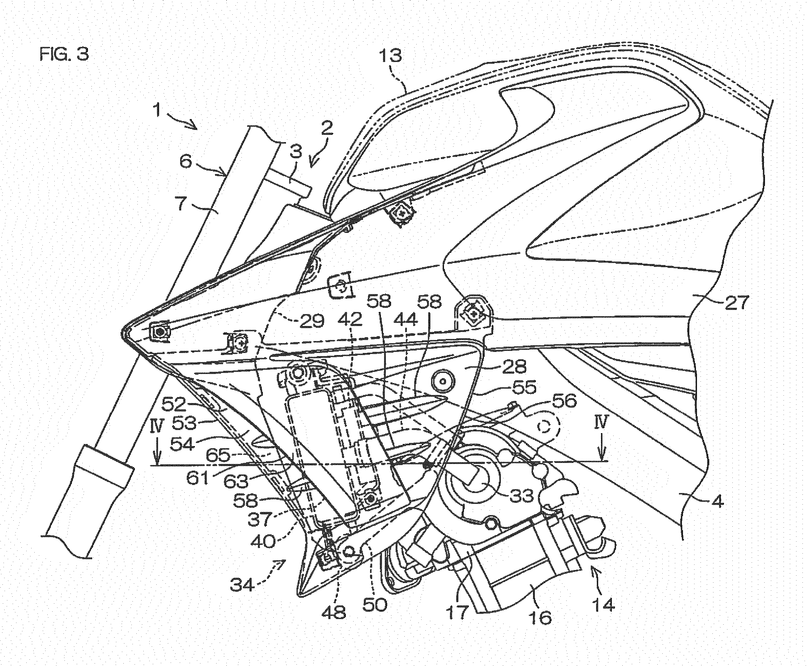

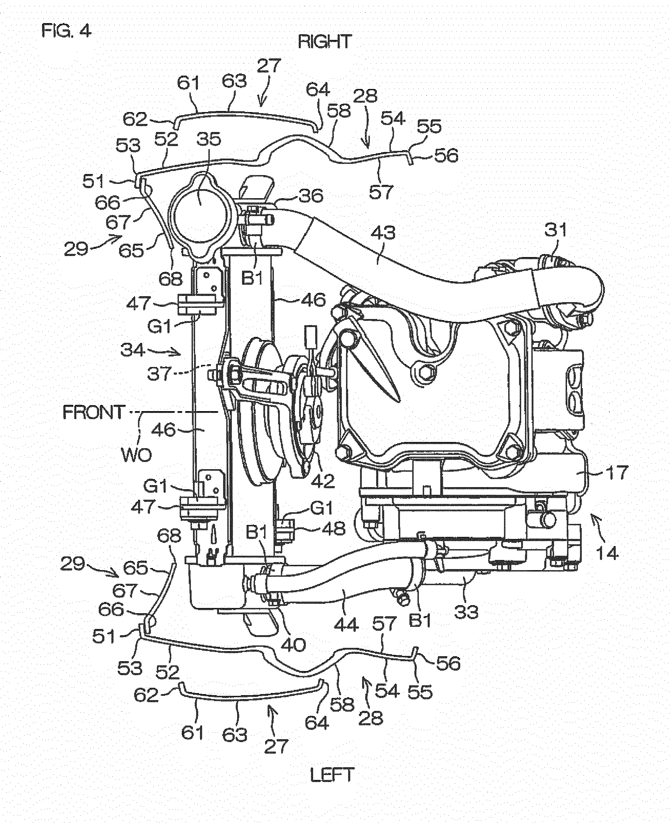

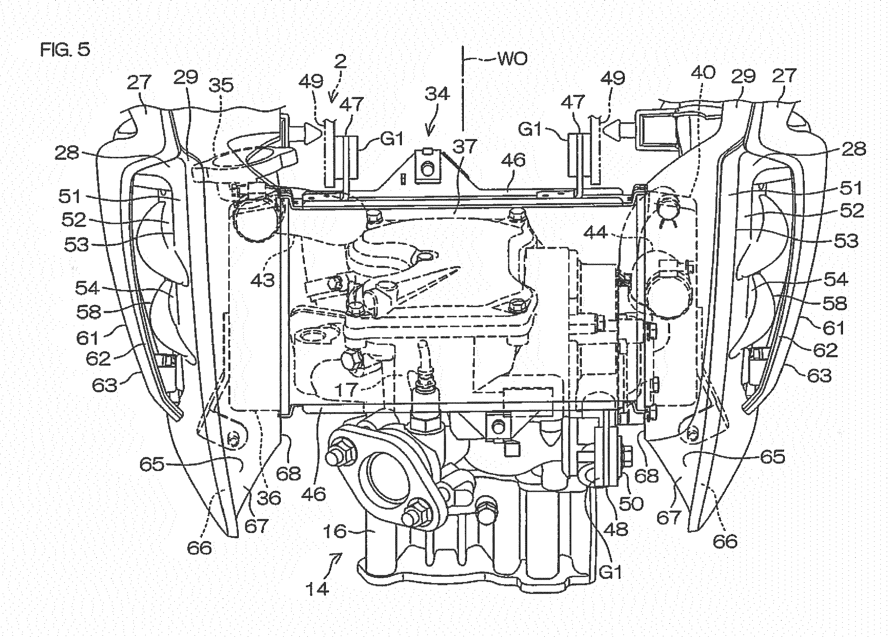

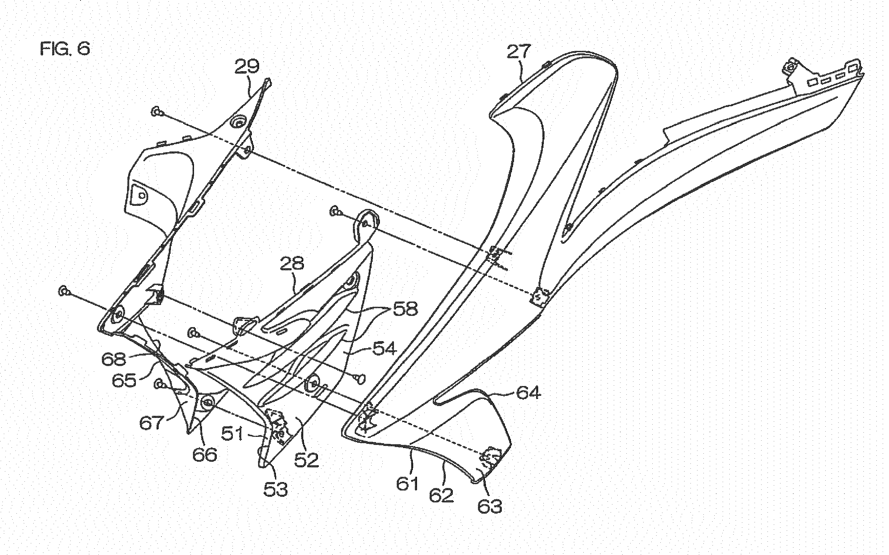

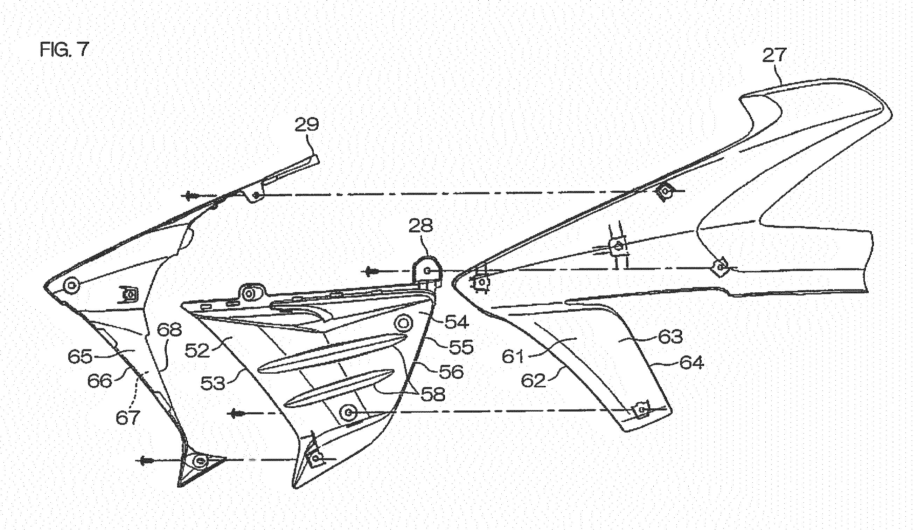

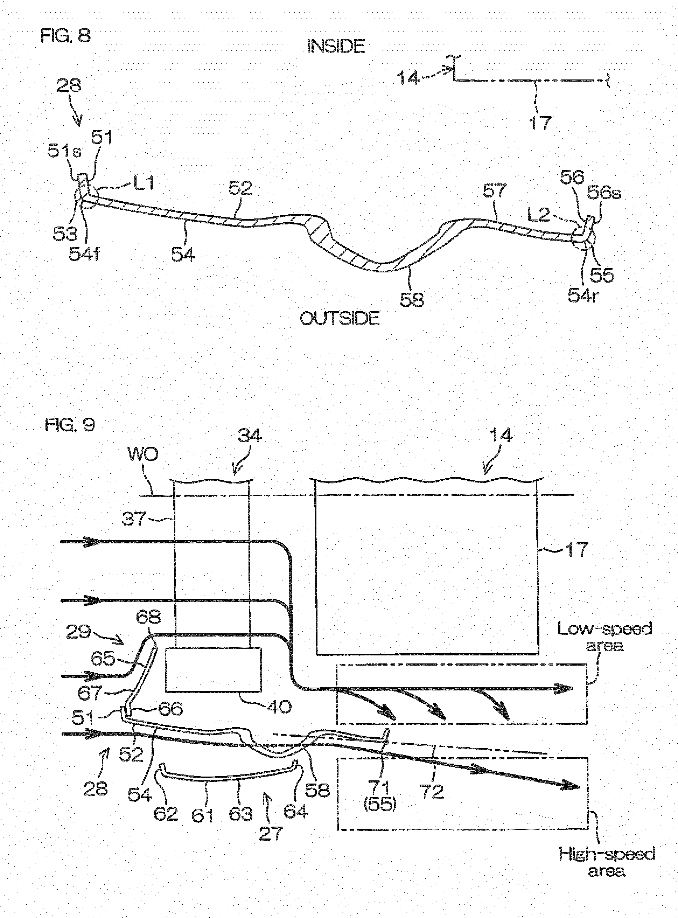

Fig. 3 is an enlarged view showing a portion of the left side of the motorcycle 1. Fig. 4 is a cross-sectional view showing a horizontal cross-section of the side cover 27, outer air guide 28 and inner air guide 29 taken along line IV-IV of Fig. 3. Fig. 5 is a front view showing the engine 14, radiator 34 and exterior cover. Fig. 6 and Fig. 7 are an exploded perspective view and a left side view, respectively, of the exterior cover. Fig. 8 is an enlarged view of a portion of Fig. 4, showing a horizontal cross-section of the outer surface 54 of the outer air guide 28.

As shown in Figs. 3 to 5, the exterior cover further includes a pair of left and right inner air guides 29 disposed between the pair of outer air guides 28. As shown in Fig. 6 and Fig. 7, the side cover 27, outer air guide 28 and inner air guide 29 are separate members connected to each other using a plurality of bolts. Two or more of the side cover 27, outer air guide 28 and inner air guide 29 may be an integral member.

As shown in Fig. 3, the side cover 27, outer air guide 28 and inner air guide 29 are disposed outward of the main frame 4 in the vehicle width direction. The side cover 27 and inner air guide 29 are disposed outward of the fuel tank 13 in the vehicle width direction. The side cover 27 and outer air guide 28 are disposed outward of the radiator 34 in the vehicle width direction, and overlap with the radiator 34 in a side view. The radiator 34 is disposed between the pair of outer air guides 28. The inner air guide 29 is disposed in front of the radiator 34, in a side view.

The radiator 34 is disposed between the front fork 6 and the engine 14. The core 37 is disposed in front of the cylinder head 17 and the head cover. The cooling fan 42 is disposed between the core 37 and the engine 14. The core 37 and discharge hose 44 are disposed below the main frame 4, in a side view. The core 37 and discharge hose 44 are disposed higher than the crankcase 15.

As shown in Fig. 4, the core 37 overlaps with the vehicle center WO. The upper tank 36 is disposed to the right of the vehicle center WO, while the lower tank 40 is disposed to the left of the vehicle center WO. The supply hose 43 extends rearward from the upper tank 36. The discharge hose 44 extends rearward from the lower tank 40. The rear end portion of the supply hose 43 is mounted on the thermostat 31 that is supported on the engine 14. The rear end portion of the discharge hose 44 is mounted on the water pump 33 that is supported on the engine 14.

The upper tank 36 includes a tank portion connected to each tube 38, and a pipe portion extending rearward from the tank portion. The thermostat 31 includes a pipe portion that guides cooling liquid to be discharged from the thermostat 31. The pipe portion of the upper tank 36 is inserted into the front end portion of the supply hose 43, and the pipe portion of the thermostat 31 is inserted into the rear end portion of the supply hose 43. The front end portion and rear end portion of the supply hose 43 are tightened by two bands B1 which are made of rubber or resin and surrounds the supply hose 43.

Similarly, the lower tank 40 includes a tank portion connected to each tube 38, and a pipe portion extending rearward from the tank portion. The pump case of the water pump 33 includes a pipe portion that guides cooling liquid that is to be supplied to the interior of the pump case. The pipe portion of the lower tank 40 is inserted into the front end portion of the discharge hose 44, and the pipe portion of the water pump 33 is inserted into the rear end portion of the discharge hose 44. The front end portion and rear end portion of the discharge hose 44 are tightened by two bands B1 which are made of rubber or resin and surrounds the discharge hose 44.

As shown in Fig. 5, the radiator 34 includes a pair of upper and lower frames 46 disposed above and below the core 37, respectively, and a plurality of brackets supported on the frame 2. The plurality of brackets include two upper brackets 47 disposed above the core 37, and a lower bracket 48 disposed below the core 37. The number of upper brackets 47 may be one, or three or more. The number of lower brackets 48 may be two or more.

The two upper brackets 47 protrude upward from the upper frame 46. The two upper brackets 47 are disposed on the right and left sides, respectively, of the vehicle center WO. A tubular rubber or resin grommet G1 is inserted in a through-hole penetrating through the upper bracket 47 in the vehicle width direction, and it is held by the upper bracket 47. The lower bracket 48 protrudes downward from the lower frame 46. The lower bracket 48 is disposed laterally of the vehicle center WO. The grommet G1 is inserted in a through-hole penetrating through the lower bracket 48 in the vehicle width direction, and it is held by the lower bracket 48.

The frame 2 includes a pair of support brackets 49 that protrude downward from the pair of main frames 4. The support brackets 49 and upper bracket 47 are aligned in the vehicle width direction. A bolt penetrates the support brackets 49 and grommet G1 in the vehicle width direction. The support brackets 49 are fastened to the grommet G1 which is held on the upper bracket 47. The support brackets 49 support the upper bracket 47 via the grommet G1.

As shown in Fig. 3, the motorcycle 1 includes a stay 50 supported on the engine 14. The stay 50 extends forward from the engine 14, in a side view. The front end portion of the stay 50 is disposed on the outer side or the inner side of the lower bracket 48, in the vehicle width direction. A bolt penetrates the stay 50 and the grommet G1 in the vehicle width direction. The stay 50 is fastened to the grommet G1 which is held on the lower bracket 48. The stay 50 supports the lower bracket 48 via the grommet G1.

As shown in Fig. 4, the outer air guide 28 includes a plate-shaped side wall portion 52 overlapping with the engine 14 and the radiator 34 in the side view, a front wall portion 51 that extends inward in the vehicle width direction from the front edge portion 53 of the side wall portion 52, and a rear wall portion 56 extending inward in the vehicle width direction from the rear edge portion 55 of the side wall portion 52. The outer air guide 28 further includes a plurality of rectifying guides 58 that protrude outward from the side wall portion 52 in the vehicle width direction.

The side wall portion 52 is positioned away from the radiator 34 on the outer side in the vehicle width direction. The side wall portion 52 includes an inner surface 57 disposed on the outer side of the radiator 34 in the vehicle width direction, and an outer surface 54 disposed on the outer side of the inner surface 57 in the vehicle width direction. The side wall portion 52 further includes a front edge portion 53 disposed further forward than the radiator 34, and a rear edge portion 55 disposed further rearward than the radiator 34. As shown in Fig. 3, the rear edge portion 55 of the side wall portion 52 overlaps with the main frame 4 and the engine 14, in a side view.

As shown in Fig. 4, the front wall portion 51 is disposed further forward than the upper tank 36, lower tank 40 and core 37. The rear wall portion 56 is disposed further rearward than the upper tank 36, lower tank 40 and core 37. The front wall portion 51 and rear wall portion 56 are disposed further outward in the vehicle width direction than the upper tank 36 and lower tank 40. The front wall portion 51 is disposed further inward in the vehicle width direction than the rear wall portion 56. The thickness of the front wall portion 51 is equal to or approximately equal to the thickness of the side wall portion 52. Similarly, the thickness of the rear wall portion 56 is equal to or approximately equal to the thickness of the side wall portion 52.

As shown in Fig. 8, the horizontal cross-section of the outer surface 54 of the outer air guide 28, i.e. the horizontal cross-section of the outer surface 54 of the side wall portion 52, includes a rear end 54r disposed on the outer side of the engine 14 in the vehicle width direction, and a front end 54f disposed at a location in front of the rear end 54r and inward in the vehicle width direction. The front end 54f of the horizontal cross-section is located on the front edge portion 53 of the side wall portion 52, and the rear end 54r of the horizontal cross-section is located on the rear edge portion 55 of the side wall portion 52. The front side 51s of the front wall portion 51 extends inward in the vehicle width direction from the front end 54f of the horizontal cross-section. The rear side 56s of the rear wall portion 56 extends inward in the vehicle width direction from the rear end 54r of the horizontal cross-section.

The rear side 56s of the rear wall portion 56 may be a side perpendicular in the front-rear direction, or it may be a side obliquely inclined with respect to the front-rear direction, or it may be a side with a continuously changing angle of inclination with respect to the front-rear direction. The cross-sectional shape of the corner portion including the intersection between the outer surface 54 of the side wall portion 52 and the rear side 56s of the rear wall portion 56 (the portion enclosed by the alternate long and two short dashed lines L2 shown in Fig. 8) may be an acute or obtuse V-shape, or it may be an arc shape. The same applies for the shape of the front side 51s of the front wall portion 51, and for the cross-sectional shape of the corner portion that includes the intersection between the outer surface 54 of the side wall portion 52 and the front side 51s of the front wall portion 51 (the portion enclosed by the alternate long and two short dashed lines L1 shown in Fig. 8).

As shown in Figs. 6 and 7, the rectifying guides 58 protrude outward in the vehicle width direction from the outer surface 54 of the side wall portion 52. The rectifying guides 58 extend obliquely rearward and upward, in a side view. The plurality of rectifying guides 58 are aligned in the vertical direction, in a side view. As shown in Fig. 3, the side cover 27 overlaps with the plurality of rectifying guides 58 in a side view. Both of the rectifying guides 58 overlap with the radiator 34 in a side view. The lower rectifying guide 58 overlaps with both the radiator 34 and the discharge hose 44, in a side view.

The side cover 27 includes an overlap portion 61 disposed on the outer side of the outer air guide 28 in the vehicle width direction. The overlap portion 61 includes a plate-shaped side wall portion 63 that overlaps with the radiator 34 and the outer air guide 28 in a side view. As shown in Fig. 4, the overlap portion 61 further includes a front wall portion 62 extending inward in the vehicle width direction from the front edge portion of the side wall portion 63, and a rear wall portion 64 extending inward in the vehicle width direction from the rear edge portion of the side wall portion 63.

The front edge portion of the overlap portion 61 is disposed further rearward than the front edge portion 53 of the outer air guide 28. The rear edge portion of the overlap portion 61 is disposed further forward than the rear edge portion 55 of the outer air guide 28. The front edge portion of the overlap portion 61 and the rear edge portion of the overlap portion 61 are positioned away from the side wall portion 52 of the outer air guide 28, outward in the vehicle width direction.

Travel wind enters between the overlap portion 61 and the outer air guide 28, through an inlet port formed between the front edge portion of the overlap portion 61 and the side wall portion 52 of the outer air guide 28. The travel wind exits rearward through an outlet port formed between the rear edge portion of the overlap portion 61 and the side wall portion 52 of the outer air guide 28. Some of the travel wind flowing between the overlap portion 61 and the outer air guide 28 is guided obliquely upward by the plurality of rectifying guides 58. This rectifies the travel wind and reduces air resistance on the motorcycle 1.

The inner air guide 29 includes an inner guide portion 65 that guides travel wind rearward toward the radiator 34. The inner guide portion 65 extends from the front wall portion 51 of the outer air guide 28 inward in the vehicle width direction toward the core 37. The front side of the inner guide portion 65 includes an inclined portion 67 that extends obliquely rearward toward the core 37. The outer edge portion 66 of the inner guide portion 65 is disposed behind the front wall portion 51 of the outer air guide 28, in contact with the front wall portion 51 of the outer air guide 28. The inner edge portion 68 of the inner guide portion 65 is disposed further rearward than the outer edge portion 66 of the inner guide portion 65. The inner edge portion 68 of the inner guide portion 65 is disposed further inward in the vehicle width direction than the outer edge portions of the upper tank 36 and lower tank 40.

Fig. 9 is a schematic view showing a horizontal cross-section for describing the air flow formed near the radiator 34 and engine 14 when the motorcycle 1 is traveling. In Fig. 9, the radiator 34 and engine 14 are omitted for easier understanding. Fig. 9 shows the flow of air as thickened lines.

As shown in Fig. 9, travel wind flowing rearward toward the core 37 passes the core 37, cooling the cooling liquid in the core 37. The travel wind that has passed the core 37 flows rearward between the outer air guide 28 and the engine 14. Meanwhile, travel wind flowing rearward toward the inner air guide 29 is guided rearward toward the core 37 by the inclined portion 67 provided on the front side of the inner guide portion 65. This allows the flow rate of air passing the core 37 to be higher, and allows the cooling efficiency of the radiator 34 to be increased.

Travel wind flowing rearward toward the outer air guide 28 is guided rearward by the outer surface 54 of the outer air guide 28. Travel wind flowing on the outer surface 54 of the outer air guide 28 enters between the outer air guide 28 and the side cover 27, and is guided obliquely rearward and upward by the plurality of rectifying guides 58. Travel wind that has exited from between the outer air guide 28 and side cover 27 moves away from the outer air guide 28 at the burble point 71 located at the rear edge portion 55 of the outer air guide 28, and flows rearward from the burble point 71.

The burble point 71 is a point at which the air flow flowing on the outer surface 54 of the outer air guide 28 begins to move away from the outer surface 54 of the outer air guide 28 in a computer simulation of an air flow conducted under a condition in which the motorcycle 1 is traveling at a speed of 120 km, for example. The location of the burble point 71 is virtually unchanged even if the speed of the motorcycle 1 varies.

The tangent line 72 of the horizontal cross-section of the outer surface 54 at the burble point 71 is either parallel to the front-rear direction, or obliquely inclined with respect to the front-rear direction so that it moves away from the vehicle center WO as it moves away rearward from the burble point 71. Fig. 9 shows an example where the burble point 71 is located at the rear edge portion 55 of the outer air guide 28, and the tangent line 72 is obliquely inclined with respect to the front-rear direction.

When the tangent line 72 is obliquely inclined with respect to the front-rear direction, travel wind flowing rearward on the outer surface 54 of the outer air guide 28 moves away from the outer air guide 28 at the burble point 71, and flows rearward in an obliquely outward direction from the burble point 71. Also, when the tangent line 72 is parallel to the front-rear direction, travel wind flowing rearward on the outer surface 54 of the outer air guide 28 flows rearward from the burble point 71 in a direction parallel to the front-rear direction. Therefore, both cases of the tangent line 72 inhibit generation of an air flow flowing inward in the vehicle width direction from the rear edge portion 55 of the outer air guide 28.

The travel wind that has passed the radiator 34 is discharged rearward from between the outer air guide 28 and the engine 14. When an air flow is generated flowing inward in the vehicle width direction from the rear edge portion 55 of the outer air guide 28, the air flow crosses and impacts with the travel wind that has passed the radiator 34, disturbing the flow of the travel wind that has passed the radiator 34. Thus, it is possible to prevent or minimize reduction in the flow rate of the air passing the radiator 34 by inhibiting generation of such an air flow.

Moreover, since the travel wind that has passed the radiator 34 decelerates at the radiator 34, the travel wind discharged rearward from between the outer air guide 28 and the engine 14 is relatively slow. On the other hand, travel wind that has moved away rearward from the burble point 71 of the outer air guide 28 is relatively fast. Differential pressure is therefore generated due to the difference in air flow speeds in the space behind the outer air guide 28. Air floating behind the radiator 34 is sucked toward a region of relatively low pressure, or in other words, the high-speed area where the air is flowing at high speed. This allows the flow rate of air passing the radiator 34 to be higher, and allows the cooling efficiency of the radiator 34 to be increased.

In the preferred embodiment described above, the outer air guide 28 overlaps both the engine 14 and the radiator 34, in a side view. All or most of the supply hose 43 is covered by the outer air guide 28. Likewise, all or most of the discharge hose 44 is covered by the outer air guide 28. Consequently, even when an air flow has been generated flowing from the rear edge portion 55 of the outer air guide 28 inward in the vehicle width direction, the air flow is unlikely to contact with the supply hose 43 and discharge hose 44. It is thus possible to reduce an increase in air resistance of the motorcycle 1 and a decrease in cooling efficiency of the radiator 34.

Travel wind flowing rearward on the outer surface 54 of the outer air guide 28 moves away from the outer air guide 28 at the burble point 71 located at the rear edge portion 55 of the outer air guide 28, and flows rearward from the burble point 71. The tangent line 72 of the horizontal cross-section of the outer surface 54 of the outer air guide 28 at the burble point 71 (hereinafter also referred to as "tangent line 72 at the burble point 71") is either parallel to the front-rear direction, or obliquely inclined with respect to the front-rear direction so that it moves away from the vehicle center WO in the vehicle width direction as it moves away rearward from the burble point 71.

Thus, both cases of the tangent line 72 at the burble point 71 inhibit generation of an air flow flowing inward in the vehicle width direction from the rear edge portion 55 of the outer air guide 28. Thus, travel wind that has passed through the core 37 of the radiator 34 is unlikely to stagnate behind the core 37. Conversely, slow travel wind floating behind the core 37 is drawn by the differential pressure toward the fast travel wind flowing rearward from the burble point 71, and is rapidly discharged from a vicinity of the engine 14. The cooling efficiency of the radiator 34 can thus be increased.

According to the preferred embodiment, the rear end 54r (see Fig. 8) of the horizontal cross-section of the outer surface 54 of the outer air guide 28 is disposed on the outer side of the engine 14 in the vehicle width direction, and overlaps with the engine 14 in a side view. Travel wind passing the core 37 of the radiator 34 is discharged rearward between the rear end 54r of the horizontal cross-section and the engine 14. In other words, the rear end 54r of the horizontal cross-section and the engine 14 define an outlet port through which travel wind that has passed the core 37 is discharged rearward.

The rear end 54r of the horizontal cross-section defining the outlet port is disposed further on the outer side in the vehicle width direction than the front end 54f (see Fig. 8) of the horizontal cross-section of the outer surface 54 of the outer air guide 28. Thus, the width of the outlet port (the length in the vehicle width direction) is wider, compared to when the front end 54f of the horizontal cross-section and the rear end 54r of the horizontal cross-section are aligned in the front-rear direction, or when the front end 54f of the horizontal cross-section is disposed further on the outer side in the vehicle width direction than the rear end 54r of the horizontal cross-section. This allows the travel wind that has passed the core 37 to be efficiently discharged from a vicinity of the engine 14.

According to the preferred embodiment, travel wind is guided rearward toward the core 37 of the radiator 34 by the inner air guide 29. The inner edge portion 68 of the inner air guide 29 is disposed further inward in the vehicle width direction than the outer edge portion of the upper tank 36 or lower tank 40. When the inner edge portion 68 of the inner air guide 29 is disposed further outward in the vehicle width direction than the outer edge portion of the upper tank 36 or lower tank 40, some of the travel wind flowing rearward on the inner air guide 29 passes through the side of the upper tank 36 or lower tank 40 without passing through the core 37. Consequently, more travel wind can be directed to the core 37.

According to the preferred embodiment, the outer edge portion 66 of the inner air guide 29 contacts with the front wall portion 51 of the outer air guide 28, and extends from the front wall portion 51 of the outer air guide 28 rearward toward the core 37 of the radiator 34. When the outer edge portion 66 of the inner air guide 29 is positioned away from the front wall portion 51 of the outer air guide 28, some of the travel wind passes between them without passing through the core 37. It is thus possible to guide more travel wind to the core 37 by connecting the outer edge portion 66 of the inner air guide 29 with the front wall portion 51 of the outer air guide 28.

According to the preferred embodiment, the burble point 71 of the outer air guide 28 is disposed further outward in the vehicle width direction than any portion of the supply hose 43. Likewise, the burble point 71 of the outer air guide 28 is disposed further outward in the vehicle width direction than any portion of the discharge hose 44. Travel wind flowing rearward on the outer surface 54 of the outer air guide 28 moves away from the outer air guide 28 at the burble point 71, and flows rearward or in an obliquely outward direction from the burble point 71.

Since the entireties of the supply hose 43 and discharge hose 44 are disposed further inward in the vehicle width direction than the burble point 71, even if portions of the supply hose 43 and discharge hose 44 are disposed further to the rear than the burble point 71, travel wind moving away from the outer air guide 28 is less likely to impact the supply hose 43 and discharge hose 44. Consequently, air resistance on the motorcycle 1 can be reduced, compared to when portions of the supply hose 43 and discharge hose 44 are disposed further outward in the vehicle width direction than the burble point 71.

According to the preferred embodiment, the entire discharge hose 44 is disposed on the inner side of the outer air guide 28 in the vehicle width direction, and overlaps with the outer air guide 28, in a side view. Thus, travel wind that has moved rearward away from the burble point 71 of the outer air guide 28 does not contact any portion of the discharge hose 44. As a result, it is possible to prevent the air resistance from increasing due to impact of travel wind on the discharge hose 44.

According to the preferred embodiment, the entire core 37 of the radiator 34 is covered by the outer air guide 28 in the side view, and therefore fast travel wind flowing on the outer surface 54 of the outer air guide 28 is less likely to flow toward the core 37 of the radiator 34. Therefore, the flow of air flowing rearward toward the core 37 of the radiator 34 is less likely to be disturbed by fast travel wind that has moved away from the outer air guide 28. This allows the flow rate of air passing the core 37 to be even further stabilized.

According to the preferred embodiment, travel wind flows rearward along the outer surface 54 of the side wall portion 52 of the outer air guide 28. The rear wall portion 56 of the outer air guide 28 extends from the rear edge portion 55 of the side wall portion 52 inward in the vehicle width direction. The side wall portion 52 of the outer air guide 28 is reinforced by the rear wall portion 56 of the outer air guide 28. This increases the rigidity of the outer air guide 28.

### Other Preferred Embodiments

Although preferred embodiments have been described above, various modifications of the embodiments are possible.

For example, instead of a radiator 34 as an example of a cooling device, an oil cooler, as another example of a cooling device, may be disposed in front of the engine 14. Alternatively, both the radiator 34 and the oil cooler may be disposed in front of the engine 14.

The core 37 of the radiator 34 may have a portion that does not overlap with the outer air guide 28 in a side view.

At least one of the front wall portion 51, rear wall portion 56 and rectifying guide 58 of the outer air guide 28 may be omitted from the outer air guide 28. Likewise, at least one of the front wall portion 62 and rear wall portion 64 of the side cover 27 may be omitted from the overlap portion 61 of the side cover 27.

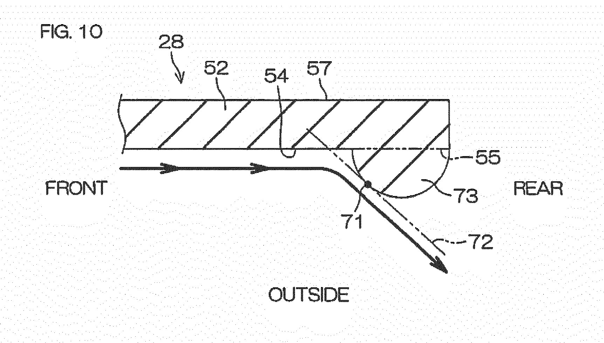

As shown in Fig. 10, the outer air guide 28 may further includes, either instead of the rear wall portion 56 or in addition to the rear wall portion 56, a protruding portion 73 that protrudes outward in the vehicle width direction from the rear edge portion 55 of the side wall portion 52. Fig. 10 shows an example of providing a protruding portion 73 instead of a rear wall portion 56. Fig. 10 also shows a thick line that indicates the flow of air flowing on the outer surface 54 of the outer air guide 28.

According to the arrangement shown in Fig. 10, travel wind flowing rearward on the outer surface 54 of the outer air guide 28 impacts with the protruding portion 73. Travel wind that has impacted the protruding portion 73 moves away from the burble point 71 located at the protruding portion 73, while being guided outward in the vehicle width direction by the protruding portion 73. This allows an air flow to be reliably formed flowing obliquely rearward and outward from the burble point 71, and can reduce the air flow flowing obliquely rearward and inward from the burble point 71.

The front end 54f (see Fig. 8) of the horizontal cross-section of the outer surface 54 of the outer air guide 28 may be disposed further outward in the vehicle width direction than the rear end 54r of the horizontal cross-section. Alternatively, the front end 54f of the horizontal cross-section and the rear end 54r of the horizontal cross-section may be aligned in the front-rear direction. That is, the front end 54f of the horizontal cross-section and the rear end 54r of the horizontal cross-section may be disposed on a straight line parallel to the front-rear direction.

The inner edge portion 68 of the inner guide portion 65 of the inner air guide 29 may be disposed further outward in the vehicle width direction than the outer edge portions of the upper tank 36 and lower tank 40.

The outer edge portion 66 of the inner guide portion 65 of the inner air guide 29 may be disposed away from the front wall portion 51 of the outer air guide 28.

The discharge hose 44 may have a portion disposed further outward in the vehicle width direction than the burble point 71. Likewise, the supply hose 43 may have a portion disposed further outward in the vehicle width direction than the burble point 71.

The discharge hose 44 may have a portion that does not overlap with the outer air guide 28 in a side view. Likewise, the supply hose 43 may have a portion that does not overlap with the outer air guide 28 in a side view.

The straddled vehicle is not limited to a motorcycle, but may be a vehicle including not less than 3 wheels, an all-terrain vehicle, or a snowmobile.

Two or more arrangements among all the arrangements described above may be combined.

## Claims

1. A straddled vehicle (1) comprising:
an engine (14) including a cylinder (16, 17) and a piston housed in the cylinder (16, 17),
a cooling device (34) disposed in front of the engine (14) and including a core (37) that includes a plurality of tubes (38) through which liquid flows and a fin (38) that is disposed between the plurality of tubes (38) and that is configured to receive travel wind generated when the straddled vehicle (1) travels, the cooling device (34) being configured to cool liquid flowing inside the plurality of tubes (38) by travel wind,
a hose (43, 44) configured to guide liquid between the engine (14) and the cooling device (34), and
an outer air guide (28) configured to overlap with both the engine (14) and the cooling device (34) in a side view of the straddled vehicle (1) and including an inner surface (57) disposed outward of the cooling device (34) in a width direction of the straddled vehicle (1) and an outer surface (54) disposed outward of the inner surface (57) in the width direction of the straddled vehicle (1), the outer air guide (28) being configured to guide travel wind rearward by the outer surface (54),
wherein a portion of the cylinder (16, 17) is visible in a side view of the straddled vehicle (1),
the outer air guide (28) includes a side wall portion (52) that overlaps with both the engine (14) and the cooling device (34) in a side view of the straddled vehicle (1), and a rear wall portion (56) that extends inward in the width direction of the straddled vehicle (1) from a rear edge portion of the side wall portion (52) corresponding to a rear edge portion (55) of the outer air guide (28),
**characterized in that**
the horizontal cross-section of the outer surface (54) of the outer air guide (28) includes a protruding portion (73) that protrudes outward in the vehicle width direction from the rear edge portion (55) of the side wall portion (52) which includes a burble point (71) where travel wind flowing on the outer surface (54) of the outer air guide (28) impacts with the protruding portion (73) and separates rearward from the outer surface (54) of the outer air guide (28),
the burble point (71) is located at the protruding portion (73) on the rear edge portion (55) of the outer air guide (28) so as to cause travel wind flowing rearward on the outer surface (54) of the outer air guide (28) to move away from the outer air guide (28) at the burble point (71) and to flow rearward from the burble point 71, disposed at a location further rearward than a front end of the engine (14) and further forward than a rear end of the engine (14), and disposed further outward than the engine (14) in the width direction of the straddled vehicle (1), and
a tangent line (72) of the horizontal cross-section of the outer surface (54) of the outer air guide (28) at the burble point (71) is parallel to a front-rear direction of the straddled vehicle (1) or obliquely inclined with respect to the front-rear direction of the straddled vehicle (1) such that it moves away from a center of the straddled vehicle (1) in the width direction of the straddled vehicle (1) as it moves away rearward from the burble point (71).

2. A straddled vehicle (1) according to claim 1, wherein the horizontal cross-section of the outer surface (54) of the outer air guide (28) includes a rear end (54r) disposed outward of the engine (14) in the width direction of the straddled vehicle (1), and a front end (54f) disposed at a location further forward than the rear end (54r) and further inward in the width direction of the straddled vehicle (1) than the rear end (54r).

3. A straddled vehicle (1) according to claim 1 or 2, wherein the straddled vehicle (1) further comprises an inner air guide (29) configured to guide travel wind rearward toward the core (37) of the cooling device (34),
the cooling device (34) further includes a tank (36, 40) that is connected to the plurality of tubes (38) and configured to guide liquid between the plurality of tubes (38) and the hose (43, 44), and
the inner air guide (29) includes an inner edge portion (68) disposed further inward in the width direction of the straddled vehicle (1) than an outer edge portion (66) of the tank (36, 40), and an outer edge portion (66) disposed at a location further outward in the width direction of the straddled vehicle (1) than the outer edge portion (66) of the tank (36, 40) and further forward than the inner edge portion (68).

4. A straddled vehicle (1) according to claim 3, wherein the hose comprises a supply hose (43) configured to guide the cooling liquid and a discharge hose (44) configured to guide the cooling liquid.

5. A straddled vehicle (1) according to claim 4, wherein the tank comprises an upper tank (36) connected to a thermostat (31) via the supply hose (43), and a lower tank (40) connected to a water pump (33) via the discharge hose (44).

6. A straddled vehicle (1) according to any one of claims 3 to 5, wherein the inner air guide (29) extends rearward from the outer air guide (28) toward the core (37) of the cooling device (34).

7. A straddled vehicle (1) according to any one of claims 1 to 6, wherein the entire hose (43, 44) is disposed further inward in the width direction of the straddled vehicle (1) than the burble point (71).

8. A straddled vehicle (1) according to any one of claims 1 to 7, wherein the outer air guide (28) overlaps with the entire hose (43, 44) in a side view of the straddled vehicle (1).

9. A straddled vehicle (1) according to any one of claims 1 to 8, wherein the outer air guide (28) overlaps with the entire core (37) of the cooling device (34) in a side view of the straddled vehicle (1).

10. A straddled vehicle (1) according to any one of claims 1 to 9, wherein the cylinder includes a cylinder body (16) that houses the piston, a cylinder head (17), and a head cover that covers the cylinder head (17).

## Patentansprüche

1. Ein Spreiz-Sitz-Fahrzeug (1), das umfasst:
einen Motor (14), der einen Zylinder (16, 17) und einen Kolben, der in dem Zylinder (16, 17) aufgenommen ist, enthält,
eine Kühlvorrichtung (34), die vor dem Motor (14) angeordnet ist und einen Kern (37) enthält, der eine Mehrzahl von Rohren (38), durch die Flüssigkeit strömt, und eine Rippe (38), die zwischen der Mehrzahl von Rohren (38) angeordnet ist, enthält, und konfiguriert ist, um Fahrtwind aufzunehmen, der erzeugt wird, wenn sich das Spreiz-Sitz-Fahrzeug (1) bewegt, die Kühlvorrichtung (34) ist konfiguriert ist, um Flüssigkeit, die in der Mehrzahl von Rohren (38) strömt, durch Fahrtwind zu kühlen,
einen Schlauch (43, 44), der so konfiguriert ist, um Flüssigkeit zwischen dem Motor (14) und der Kühlvorrichtung (34) leitet, und
eine äußere Luftführung (28), die konfiguriert ist, um in einer Seitenansicht des Spreiz-Sitz-Fahrzeugs (1) beide, den Motor (14) und die Kühlvorrichtung (34), zu überlappen, und die eine Innenfläche (57), die in einer Breitenrichtung des Spreiz-Sitz-Fahrzeugs (1) außerhalb der Kühlvorrichtung (34) angeordnet ist, und eine Außenfläche (54), die in der Breitenrichtung des Spreiz-Sitz-Fahrzeugs (1) außerhalb der Innenfläche (57) angeordnet ist, enthält, die äußere Luftführung (28) ist konfiguriert, um Fahrtwind durch die Außenfläche (54) nach hinten leitet,
wobei ein Abschnitt des Zylinders (16, 17) in einer Seitenansicht des Spreiz-Sitz-Fahrzeugs (1) sichtbar ist,
die äußere Luftführung (28) einen Seitenwandabschnitt (52), der in einer Seitenansicht des Spreiz-Sitz-Fahrzeugs (1) beide, den Motor (14) und die Kühlvorrichtung (34), überlappt, und einen Rückwandabschnitt (56), der sich von einem hinteren Kantenabschnitt des Seitenwandabschnitts (52), der einem hinteren Kantenabschnitt (55) der äußeren Luftführung (28) entspricht, in der Breitenrichtung des Spreiz-Sitz-Fahrzeugs (1) nach innen erstreckt, enthält, **dadurch gekennzeichnet, dass**
der horizontale Querschnitt der Außenfläche (54) der äußeren Luftführung (28) einen vorstehenden Abschnitt (73) enthält, der in der Fahrzeugbreitenrichtung von dem hinteren Kantenabschnitt (55) des Seitenwandabschnitts (52) nach außen vorsteht, der einen Abrisspunkt (71) aufweist, an dem Fahrtwind, der auf der Außenfläche (54) der äußeren Luftführung (28) strömt, auf den vorstehenden Abschnitt (73) auftrifft und sich nach hinten von der Außenfläche (54) der äußeren Luftführung (28) ablöst,
der Abrisspunkt (71) an dem vorstehenden Abschnitt (73) an dem hinteren Kantenabschnitt (55) der äußeren Luftführung (28) angeordnet ist, um zu bewirken, dass Fahrtwind, der an der Außenfläche (54) der äußeren Luftführung (28) nach hinten strömt, sich an dem Abrisspunkt (71) von der äußeren Luftführung (28) weg bewegt und von dem Abrisspunkt (71) nach hinten strömt, der an einer Stelle angeordnet ist, die weiter hinten als ein vorderes Ende des Motors (14) und weiter vorne als ein hinteres Ende des Motors (14) und weiter außen als der Motor (14) in der Breitenrichtung des Spreiz-Sitz-Fahrzeugs (1) angeordnet ist, und
eine Tangente (72) des horizontalen Querschnitts der Außenfläche (54) der äußeren Luftführung (28) an dem Abrisspunkt (71) parallel zu einer Vorwärts-Rückwärts-Richtung des Spreiz-Sitz-Fahrzeugs (1) oder schräg geneigt in Bezug auf die Vorwärts-Rückwärts-Richtung des Spreiz-Sitz-Fahrzeugs (1) ist, so dass sie sich von einer Mitte des Spreiz-Sitz-Fahrzeugs (1) in der Breitenrichtung des Spreiz-Sitz-Fahrzeugs (1) wegbewegt, wenn sie sich von dem Abrisspunkt (71) nach hinten wegbewegt.

2. Ein Spreiz-Sitz-Fahrzeug (1) gemäß Anspruch 1, wobei der horizontale Querschnitt der Außenfläche (54) der äußeren Luftführung (28) ein hinteres Ende (54r), das in Breitenrichtung des Spreiz-Sitz-Fahrzeugs (1) außerhalb des Motors (14) angeordnet ist, und ein vorderes Ende (54f), das an einer Stelle weiter vorne als das hintere Ende (54r) und in Breitenrichtung des Spreiz-Sitz-Fahrzeugs (1) weiter innen als das hintere Ende (54r) angeordnet ist, enthält.

3. Ein Spreiz-Sitz-Fahrzeug (1) gemäß Anspruch 1 oder 2, wobei das Spreiz-Sitz-Fahrzeug (1) weiterhin eine innere Luftführung (29) aufweist, die konfiguriert ist, um Fahrtwind nach hinten zum Kern (37) der Kühlvorrichtung (34) zu leiten,
die Kühlvorrichtung (34) weiterhin einen Tank (36, 40) enthält, der mit der Mehrzahl von Rohren (38) verbunden ist, und konfiguriert ist, um Flüssigkeit zwischen der Mehrzahl von Rohren (38) und dem Schlauch (43, 44) zu leiten, und
die innere Luftführung (29) einen inneren Kantenabschnitt (68), der in Breitenrichtung des Spreiz-Sitz-Fahrzeugs (1) weiter innen angeordnet ist als ein äußerer Kantenabschnitt (66) des Tanks (36, 40), und einen äußeren Kantenabschnitt (66), der an einer Stelle angeordnet ist, die in Breitenrichtung des Spreiz-Sitz-Fahrzeugs (1) weiter außen liegt als der äußere Kantenabschnitt (66) des Tanks (36, 40) und weiter vorne als der innere Kantenabschnitt (68) enthält.

4. Ein Spreiz-Sitz-Fahrzeug (1) gemäß Anspruch 3, wobei der Schlauch einen Zufuhrschlauch (43), der zur Führung der Kühlflüssigkeit konfiguriert ist, und einen Abfuhrschlauch (44), der zur Führung der Kühlflüssigkeit konfiguriert ist, aufweist.

5. Ein Spreiz-Sitz-Fahrzeug (1) gemäß Anspruch 4, wobei der Tank einen oberen Tank (36), der mit einem Thermostat (31) über den Zufuhrschlauch (43) verbunden ist, und einen unteren Tank (40), der mit einer Wasserpumpe (33) über den Abflussschlauch (44) verbunden ist, aufweist.

6. Ein Spreiz-Sitz-Fahrzeug (1) gemäß irgendeinem der Ansprüche 3 bis 5, wobei sich die innere Luftführung (29) von der äußeren Luftführung (28) nach hinten zu dem Kern (37) der Kühlvorrichtung (34) erstreckt.

7. Ein Spreiz-Sitz-Fahrzeug (1) gemäß irgendeinem der Ansprüche 1 bis 6, wobei der gesamte Schlauch (43, 44) in Breitenrichtung des Spreiz-Sitz-Fahrzeugs (1) weiter innen angeordnet ist als der Abrisspunkt (71).

8. Ein Spreiz-Sitz-Fahrzeug (1) gemäß irgendeinem der Ansprüche 1 bis 7, wobei sich die äußere Luftführung (28) in einer Seitenansicht des Spreiz-Sitz-Fahrzeugs (1) mit dem gesamten Schlauch (43, 44) überlappt.

9. Ein Spreiz-Sitz-Fahrzeug (1) gemäß irgendeinem der Ansprüche 1 bis 8, wobei die äußere Luftführung (28) in einer Seitenansicht des Spreiz-Sitz-Fahrzeugs (1) den gesamten Kern (37) der Kühlvorrichtung (34) überlappt.

10. Ein Spreiz-Sitz-Fahrzeug (1) gemäß irgendeinem der Ansprüche 1 bis 9, wobei der Zylinder einen Zylinderkörper (16), der den Kolben aufnimmt, einen Zylinderkopf (17) und einen Kopfdeckel, der den Zylinderkopf (17) abdeckt, enthält.

## Revendications

1. Véhicule à enfourcher (1), comprenant :
un moteur (14) comprenant un cylindre (16, 17) et un piston logé dans le cylindre (16, 17),
un dispositif de refroidissement (34) disposé devant le moteur (14) et comprenant un coeur (37) qui comporte une pluralité de tubes (38) à travers lesquels le liquide s'écoule et une ailette (38) qui est disposée entre la pluralité de tubes (38) et configurée pour recevoir le vent de déplacement généré quand le véhicule à enfourcher (1) se déplace, le dispositif de refroidissement (34) étant configuré pour refroidir le liquide qui circule à l'intérieur de la pluralité de tubes (38) à l'aide du vent de déplacement, d'un tuyau (43, 44) configuré pour guider un liquide entre le moteur (14) et du dispositif de refroidissement (34), et
un guide d'air externe (28) configuré pour chevaucher à la fois le moteur (14) et le dispositif de refroidissement (34) en vue latérale du véhicule à enfourcher (1), et comprenant une surface interne (57) disposée vers l'extérieur du dispositif de refroidissement (34) en direction de la largeur du véhicule à enfourcher (1) et une surface externe (54) disposée vers l'extérieur de la surface interne (57) en direction de la largeur du véhicule à enfourcher (1), le guide d'air externe (28) étant configuré pour guider le vent de déplacement vers l'arrière à l'aide de la surface externe (54),
dans lequel une portion du cylindre (16, 17) est visible en vue latérale du véhicule à enfourcher (1), et
le guide d'air externe (28) comprend une portion de paroi latérale (52) qui chevauche à la fois le moteur (14) et le dispositif de refroidissement (34) en vue latérale du véhicule à enfourcher (1) et une portion de paroi arrière (56) qui s'étend vers l'intérieur en direction de la largeur du véhicule à enfourcher (1) depuis une portion de bord arrière de la portion de paroi latérale (52) correspondant à une portion de bord arrière (55) du guide d'air externe (28),
**caractérisé en ce que**
la section transversale horizontale de la surface externe (54) du guide d'air externe (28) comprend une portion saillante (73) qui fait saillie vers l'extérieur en direction de la largeur du véhicule depuis la portion de bord arrière (55) de la portion de paroi latérale (52) qui comprend un point de bourdonnement (71), où le vent de déplacement qui s'écoule sur la surface externe (54) du guide d'air externe (28) heurte la portion saillante (73) et se sépare vers l'arrière depuis la surface externe (54) du guide d'air externe (28),
le point de bourdonnement (71) est situé sur la portion saillante (73) de la portion de bord arrière (55) du guide d'air externe (28) de manière à provoquer un écoulement du vent de déplacement vers l'arrière sur la surface externe (54) du guide d'air externe (28) pour l'éloigner du guide d'air externe (28) au niveau du point de bourdonnement (71) et le diriger vers l'arrière depuis le point de bourdonnement (71), disposé à un emplacement plus en arrière qu'une extrémité avant du moteur (14) et plus en avant qu'une extrémité arrière du moteur (14), et disposé plus vers l'extérieur que le moteur (14) en direction de la largeur du véhicule à enfourcher (1), et
une ligne tangente (72) de la section transversale horizontale de la surface externe (54) du guide d'air externe (28) au point de bourdonnement (71) est parallèle à la direction avant-arrière du véhicule à enfourcher (1) ou est inclinée en oblique par rapport à la direction avant-arrière du véhicule à enfourcher (1) de telle sorte qu'elle s'éloigne d'un centre du véhicule à enfourcher (1) en direction de la largeur du véhicule à enfourcher (1) à mesure qu'elle s'éloigne vers l'arrière depuis le point de bourdonnement (71).

2. Véhicule à enfourcher (1) selon la revendication 1, dans lequel la section transversale horizontale de la surface externe (54) du guide d'air externe (28) comprend une extrémité arrière (54r) disposée vers l'extérieur du moteur (14) en direction de la largeur du véhicule à enfourcher (1), et une extrémité avant (54f) disposée à un emplacement plus en avant que l'extrémité arrière (54r) et plus vers l'intérieur en direction de la largeur du véhicule à enfourcher (1) que l'extrémité arrière (54r).

3. Véhicule à enfourcher (1) selon la revendication 1 ou 2, dans lequel
le véhicule à enfourcher (1) comprend en outre un guide d'air interne (29) configuré pour guider le vent de déplacement vers l'arrière en direction du coeur (37) du dispositif de refroidissement (34),
le dispositif de refroidissement (34) comprend en outre un réservoir (36, 40) qui est connecté à la pluralité de tubes (38) et configuré pour guider le liquide entre la pluralité de tubes (38) et le tuyau (43, 44), et
le guide d'air interne (29) comprend une portion de bord interne (68) disposée plus vers l'intérieur en direction de la largeur du véhicule à enfourcher (1) qu'une portion de bord externe (66) du réservoir (36, 40), et une portion de bord externe (66) disposée à un emplacement plus vers l'extérieur en direction de la largeur du véhicule à enfourcher (1) que la portion de bord externe (66) du réservoir (36, 40) et plus en avant que la portion de bord interne (68).

4. Véhicule à enfourcher (1) selon la revendication 3, dans lequel le tuyau comprend un tuyau d'alimentation (43) configuré pour guider le liquide de refroidissement et un tuyau de refoulement (44) configuré pour guider le liquide de refroidissement.

5. Véhicule à enfourcher (1) selon la revendication 4, dans lequel le réservoir comprend un réservoir supérieur (36) connecté à un thermostat (31) via le tuyau d'alimentation (43), et un réservoir inférieur (40) connecté à une pompe à eau (33) via le tuyau de refoulement (44).

6. Véhicule à enfourcher (1) selon l'une quelconque des revendications 3 à 5, dans lequel le guide d'air interne (29) s'étend vers l'arrière depuis le guide d'air externe (28) en direction du coeur (37) du dispositif de refroidissement (34).

7. Véhicule à enfourcher (1) selon l'une quelconque des revendications 1 à 6, dans lequel la totalité du tuyau (43, 44) est disposée plus vers l'intérieur en direction de la largeur du véhicule à enfourcher (1) que le point de bourdonnement (71).

8. Véhicule à enfourcher (1) selon l'une quelconque des revendications 1 à 7, dans lequel le guide d'air externe (28) chevauche la totalité du tuyau (43, 44) en vue latérale du véhicule à enfourcher (1).

9. Véhicule à enfourcher (1) selon l'une quelconque des revendications 1 à 8, dans lequel le guide d'air externe (28) chevauche la totalité du coeur (37) du dispositif de refroidissement (34) en vue latérale du véhicule à enfourcher (1).

10. Véhicule à enfourcher (1) selon l'une quelconque des revendications 1 à 9, dans lequel le cylindre comprend un corps de cylindre (16) qui reçoit le piston, une culasse (17) et un couvre-culasse qui recouvre la culasse (17).
